(19) Europäisches Patentamt
European Patent Office
Office européen des brevets

(11) **EP 2 067 115 B1**

(12) **FASCICULE DE BREVET EUROPEEN**

(45) Date de publication et mention de la délivrance du brevet:
**24.11.2010 Bulletin 2010/47**

(21) Numéro de dépôt: **06793430.7**

(22) Date de dépôt: **11.09.2006**

(51) Int Cl.:
**G06K 7/00** *(2006.01)* **G06K 19/077** *(2006.01)*

(86) Numéro de dépôt international:
**PCT/EP2006/066252**

(87) Numéro de publication internationale:
**WO 2008/031455 (20.03.2008 Gazette 2008/12)**

(54) **PROCEDE ET SYSTEME DE LECTURE OPTIMISEE DE TRANSPONDEUR DE COMMUNICATION RADIO FREQUENCE A L'AIDE D'UN CIRCUIT RESONANT PASSIF**

VERFAHREN UND SYSTEM ZUM OPTIMIERTEN LESEN EINES HOCHFREQUENZKOMMUNIKATIONSTRANSPONDERS MIT HILFE EINES PASSIVEN RESONANZSCHALTKREISES

METHOD AND SYSTEM FOR OPTIMIZED READING OF A RADIO FREQUENCY COMMUNICATION TRANSPONDER WITH THE AID OF A PASSIVE RESONANT CIRCUIT

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**10.06.2009 Bulletin 2009/24**

(73) Titulaire: **Gemalto SA**
**92190 Meudon (FR)**

(72) Inventeur: **CARUANA, Jean-Paul**
**F-13009 Marseille (FR)**

(56) Documents cités:
**FR-A- 2 887 712        FR-A1- 2 777 141**
**US-A1- 2005 230 966    US-A1- 2006 164 249**
**US-B1- 6 172 608       US-B1- 6 774 865**

• **FINKENZELLER, KLAUS: "RFID Handbuch" 26 septembre 2002 (2002-09-26), HANSER , MÜNCHEN WIEN , XP002439097 ISBN: 3-446-22036-4 pages 83-85**

## Description

L'invention concerne le domaine des procédés et systèmes de lecture de transpondeurs radiofréquences RF et la structure de ces transpondeurs radiofréquences.

Plus particulièrement, l'invention s'intéresse à une amélioration de la lecture et/ou des communications entre un transpondeur susceptible d'être entouré de plusieurs transpondeurs et un lecteur prévu à cet effet.

L'invention vise en particulier une application de ces procédés et systèmes à la lecture de documents de voyage électroniques sans contact tels que passeports électroniques et visas électroniques sous forme de transpondeurs disposés ensemble. En particulier, ces documents et visas sont conformes aux spécifications de l'ICAO (acronyme de l'expression anglo-saxonne "International Civil Aviation Organization") et norme ISO/IEC 14443.

Les documents de voyage tel que passeports électroniques et/ou visas électroniques sont constitués d'une part d'un document papier sur lequel sont inscrites des informations concernant le porteur dudit document et d'autre part une puce électronique sans contact qui contient également de manière sécurisée des informations concernant ce même porteur.

Le problème non résolu survient dès lors que le document de voyage du type passeport électronique doit comporter également plusieurs visas électroniques.

En effet du fait même des principes utilisés par ces puces électroniques sans contacts, l'augmentation du nombre de visas électroniques dans le document rend leur lecture simultanée de plus en plus difficile au fur et à mesure que leur nombre croit, allant même jusqu'à rendre impossible leur fonctionnement dès lors que ce nombre excède 4 ou 5 visas.

Le besoin exprimé au niveau des documents de voyage électroniques est que lesdits documents puissent contenir un maximum de visas électronique sans contact qui fonctionnent simultanément lorsqu'ils sont soumis à un champ magnétique provenant d'un lecteur sans contact. Le lecteur et les documents de voyage devant être conformes à la norme ISO/IEC 14443.

Le cahier des charges du/des visas électroniques sans contact exige d'une part que chaque visa consomme et interagisse le plus faiblement possible avec le champ magnétique provenant du lecteur sans contact et d'autre part que chacun d'eux provoquent une variation dudit champ magnétique compatible avec les clauses imposées par le standard ISO/IEC 14443 lors de phases de réponses du visa vers le lecteur.

La technologie sans contact issue de la norme ISO/IEC 14443 décrit les mécanismes permettant de mettre en oeuvre des principes d'anticollisions entre produits sans contact. Ces principes proposent des mécanismes logiques permettant d'extraire un produit sans contact parmi plusieurs lorsqu'ils sont soumis au même champ magnétique. La condition nécessaire au bon fonctionnement de ces principes est que le lecteur alimente tous les produits présents dans le champ qu'il génère et qu'il les détecte tous.

En particulier, le mécanisme d'anticollision sans contact est limité par la consommation et la charge magnétique induite par la somme de plusieurs transpondeurs sans contact. Ceci limite le nombre de visas électroniques lisibles dans ou hors d'un passeport électronique.

Par ailleurs, le standard ISO/IEC 14443 contient une clause imposant que les produits sans contact fonctionnent dans une plage de champ magnétique compris entre 1,5 A/m et 7,5 A/m. Cette clause permet aux produits sans contact de fonctionner à partir d'un champ magnétique d'au moins 1,5 A/m.

Un lecteur conforme à la norme pourra donc ne générer qu'un champ de 1,5 A/m en présence du document de voyage tout en étant conforme à la norme. Le standard ISO/IEC 14443 impose également l'amplitude minimale de la réponse du produit sans contact pour que le lecteur puisse le détecter.

Cette amplitude minimale vaut au moins $30/H^{1,2}$, (soit 18,6mV) avec H amplitude du champ magnétique. Cette valeur est définie à partir de l'amplitude des bandes latérales générée du fait de la modulation d'amplitude du champ magnétique lecteur, de fréquence 13,56 MHz par le produit sans contact, au rythme de sa sous porteuse cadencée à 847Khz.

Si ces conditions sont respectées, le lecteur sans contact conforme au standard devrait être en mesure de réceptionner les données de la puce sans contact.

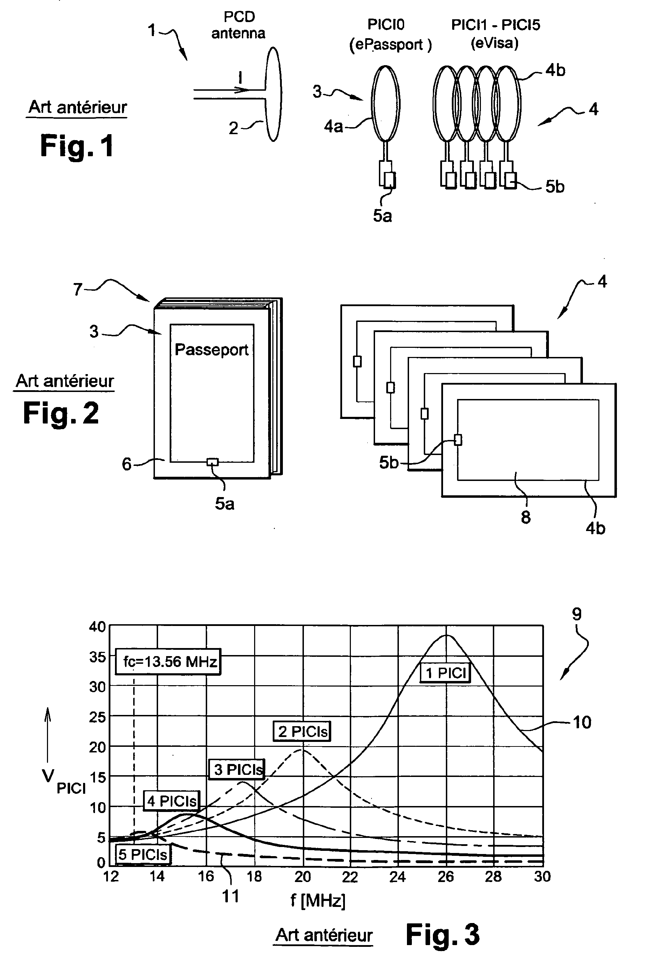

L'état de l'art actuel permet de respecter toutes ces conditions dès lors que l'on positionne un nombre maximum de quelques visas électroniques dans le document de voyage. Actuellement, 5 visas apparaissent comme un maximum au vu de la courbe de réponse des transpondeurs (figure 3 extraite du document officiel N1088 de l'ISO/IEC JTC1/SC17/WG8)

L'inventeur a observé que si l'on utilise plus de cinq produits sans contact individuellement conforme au standard, lorsqu'ils sont rassemblés dans un même document de voyage, du fait des couplages électromagnétiques entre eux, l'ensemble n'est plus conforme au standard ISO/IEC 14443. Le lecteur sans contact, conforme, n'est plus censé être capable ni de les alimenter ni de les détecter.

Cette limitation à cinq dans le nombre de transpondeurs a été considérée par l'inventeur comme pouvant constituer un inconvénient dans le développement du passeport électronique, mais aussi d'une manière générale pour la lecture de plusieurs transpondeurs disposés ensemble quelle que soit l'application envisagée.

L'inventeur s'est donc proposé d'améliorer en général la communication sans contact avec un nombre de transpondeurs pour une puissance constante du lecteur.

Parmi l'art antérieur connu permettant d'améliorer la communication entre des transpondeurs et un lecteur on connaît les brevets FR 2 777 141 ou US 6172608

Ces brevets proposent d'avoir un deuxième circuit oscillant qui peut être accordé sur une fréquence voisine du (ou égale au) champ électromagnétique, de telle sorte que la modulation du champ effectué par le transpondeur soit mieux détectée par l'antenne du lecteur. Ces documents enseignent notamment l'utilisation d'un circuit résonant passif pour augmenter la distance de communication entre lecteur et transpondeur tout en gardant un bon fonctionnement et sans augmenter la puissance d'émission du lecteur.

D'autre part, on connaît le document FR 2 812 482-A1 qui utilise une antenne collective fermée pour amplifier la communication du lecteur avec plusieurs transpondeurs disposés dans un même support. La multiplicité des transpondeurs sur un support correspond à un problème d'augmentation de la mémoire disponible de stockage sur le support. Les transpondeurs ont un format plus réduit que l'antenne passive pour des questions de coût de fabrication. Ce document n'enseigne pas d'optimiser le nombre de transpondeurs lisibles à puissance de champ électromagnétique constante. Les revendications indépendentes sont délimétées envue de ce document.

En outre, l'agencement d'une antenne collective passive fermée et associée à plusieurs transpondeurs de taille plus réduite que l'antenne passive ne semble pas pouvoir fonctionner tel qu'exposé dans ce document dans l'état des connaissances de l'homme de l'art.

L'invention a notamment pour objectif de résoudre les inconvénients précédemment exposés.

Elle vise d'une manière générale des améliorations dans la lecture de transpondeurs, améliorations devant permettre de conduire à une augmentation du nombre de transpondeurs lisibles ensemble dans un champ électromagnétique déterminé, quelle que soit leur taille.

Elle vise également à proposer une optimisation du nombre de transpondeurs lisibles ensemble pour l'application passeport électronique, conforme aux spécifications de l'ICAO et ISO/IEC14443 en particulier. De nouvelles caractéristiques de transpondeurs sont proposées à cet effet.

Selon un premier aspect, l'invention a pour objet un procédé de lecture de transpondeurs RF disposés dans un même champ magnétique d'interrogation sans contact, dans lequel on assure un couplage magnétique des transpondeurs avec un circuit résonant passif lors de la lecture.

Le procédé est caractérisé en ce que l'antenne passive du circuit résonant est associée à au moins une antenne de transpondeur, et le circuit résonant passif est accordé de manière à ce que la fréquence de résonance résultant de l'association corresponde à une des fréquences des bandes latérales d'émission du transpondeur à lire.

Ces dispositions permettent de privilégier l'amplitude du signal de retour du transpondeur.

Selon un mode de mise en oeuvre particulier, l'association de l'antenne passive du circuit résonant avec au moins une antenne de transpondeur est rendue négligeable et le circuit résonant passif est accordé à une fréquence de résonance correspondant à une des fréquences des bandes latérales d'émission du transpondeur à lire.

Ces dispositions permettent de simplifier encore plus le procédé de lecture tout en privilégiant l'amplitude du signal de retour issue de la puce du module-antenne ou transpondeur.

L'invention concerne également un système de lecture d'au moins un transpondeur RF, ledit système comprenant un lecteur apte à émettre un champ d'interrogation sur au moins un transpondeur et à recueillir une réponse du transpondeur, un circuit résonant passif pour effectuer un couplage magnétique avec au moins un transpondeur lors de la lecture.

Le système est caractérisé en ce que le circuit résonant passif est accordé de manière à ce que la fréquence de résonance résultant de l'association du circuit résonant avec au moins un transpondeur corresponde à une des fréquences des bandes latérales d'émission du transpondeur à lire.

Un autre aspect de l'invention concerne un objet support contenant au moins un transpondeur principal, au moins un transpondeur secondaire et un circuit résonant passit associé au moins au transpondeur principal.

L'objet est caractérisé en ce que le circuit résonant passif est accordé de manière à ce que la fréquence de résonance résultant de l'association du circuit résonant avec le transpondeur principal au moins, corresponde à une des fréquences des bandes latérales d'émission du transpondeur secondaire.

Un autre aspect de l'invention concerne un objet support contenant au moins un transpondeur et un circuit résonant passif associé au moins au transpondeur; il est caractérisé en ce que le circuit résonant passif est accordé à une fréquence de résonance correspondant à une des fréquences des bandes latérales d'émission du transpondeur.

Une mode de mise en oeuvre de l'invention concerne un transpondeur comportant une antenne plate sur un support définissant une spire extérieure;

Le transpondeur est **caractérisé en ce que** :

- la surface à l'intérieur de la spire extérieure est supérieure à une surface de 15 x 15 mm et inférieure à une surface d'environ 30 x 30 mm,
- l'antenne comporte de l'ordre entre 13 et 18 spires,
- la fréquence d'accord est comprise entre 15 et 18 MHz,
- un facteur qualité supérieur à 30.

Une autre mode de mise en oeuvre de l'invention concerne un document de voyage comportant plusieurs pages entre deux couvertures et une pluralité de transpondeurs entre les pages, chaque transpondeur étant contenu dans un support plan distinct des pages ou couvertures mais ayant sensiblement le format d'une page. le transpondeur ayant les caractéristiques ci-dessus.

Selon une disposition avantageuse permettant d'avoir moins d'interférence ou couplage entre les transpondeurs, ces derniers sont disposés dans les supports dans différentes positions, notamment aléatoires.

D'autres particularités et avantages de l'invention apparaîtront à la lecture de la description faite à titre d'exemple non limitatif et en regard des dessins annexés sur lesquels :

- La figure 1 illustre un système de lecture de passeport électronique selon l'art antérieur ;
- La figure 2 illustre un passeport électronique et les différents visas de l'art antérieur;
- La figure 3 illustre des courbes de tension de réponse en fonction du nombre de transpondeurs de l'art antérieur;
- La figure 4 illustre une coupe de la figure 5 selon A-A;
- La figure 5 illustre un système de lecture de transpondeurs conforme à un mode de réalisation de l'invention;
- La figure 6 illustre une zone des dimensions possibles pour l'antenne passive selon un mode de mise en oeuvre de l'invention;
- La figure 7 illustre un document de voyage conforme à un mode de réalisation de l'invention;
- La figure 8 illustre un système de lecture de document de voyage conforme à la figure précédente;
- La figure 9 illustre une vue schématique du système de lecture de la figure précédente;
- La figure 10 illustre une configuration de lecture de transpondeurs utilisant une association du circuit résonant passif avec un transpondeur principal;
- La figure 11 illustre un transpondeur selon un mode de réalisation de l'invention;
- Les figures 12, 13 illustrent des conditionnements de transpondeur selon un autre mode de réalisation de l'invention.

A la figure 1, un système de lecture 1 existant de passeports électroniques et de visas électroniques sous forme de transpondeurs de type radiofréquence (RF) comprend un lecteur apte à émettre un champ d'interrogation via une antenne émettrice 2 et à recueillir une réponse du transpondeur soumis à ce champ.

Le passeport 3 (PICI0) et chaque visa 4 (PICI1-PICI5) comportent le même type de transpondeurs à savoir un circuit électronique (5a, 5b) de type RF-ID (identification radiofréquence) relié à une antenne (4a- 4b).

A la figure 2, le transpondeur du passeport est noyé dans la couverture 6 d'un passeport 7 et chaque transpondeur de visa électronique est noyé dans une feuille 8.

A la figure 3, un diagramme de courbes de réponse (10) en tension d'un transpondeur au format ID1 (format des passeport actuels) culmine au-delà de 35 Volts tandis que la réponse en tension de 5 transpondeurs PICI disposés ensemble avoisine 5 Volts. Au-delà de 5 transpondeurs la tension chute considérablement et il ne devient plus possible de détecter et lire plus de 5 transpondeurs à la fréquence de 13,56 MHz.

D'une manière générale, dans le cadre de la présente description, on entend par transpondeur dans le cadre de la description qui va suivre, tout circuit électronique d'identification utilisant une détection ou une communication à l'aide d'un champ électromagnétique. On s'intéresse plus particulièrement aux transpondeurs électromagnétiques comportant une bobine connectée à un condensateur ou à un circuit intégré ou à d'autres composants électroniques.

Les transpondeurs comprennent notamment un composant électronique tel qu'une puce de circuit intégré reliée à une antenne. Ils peuvent être insérés ou associés à tout type de support. Ils prennent par exemple la forme d'étiquettes électroniques adhésives, cartes sans contact; ils peuvent être noyés dans un emballage, une couverture de document, une feuille ou autre, etc.

Les transpondeurs sont utilisés dans différents domaines économiques tels que le bancaire (porte-monnaie électronique), la communication, le transport, l'identité (e-passeport, ID-carte). Dans l'identité notamment, il est connu d'effectuer l'identification d'une personne par communication radiofréquence avec un objet électronique portable sans contact de type RFID.

De manière générale, on entend par lecteur, dans le cadre de la description qui va suivre, un dispositif émetteur/récepteur muni d'une antenne qui crée un champ électromagnétique à une fréquence donnée. L'antenne du dispositif permet également de moduler le champ électromagnétique et de mesurer des variations du champ électromagnétique. L'antenne du lecteur est généralement constituée d'une ou plusieurs bobines.

Le système lecteur-transpondeur fonctionne de manière plus ou moins complexe suivant le type de transpondeur utilisé. Le principe général de fonctionnement consiste en l'émission d'un champ électromagnétique de fréquence donnée. Lorsqu'un transpondeur entre dans le champ électromagnétique, il est alors alimenté et il réagit. La réaction du transpondeur provoque une variation du champ électromagnétique qui est détectée par le lecteur.

Pour les systèmes les plus simples, le transpondeur étant par exemple constitué d'une bobine et d'un condensateur, l'ensemble forme un circuit oscillant accordé sur la fréquence du champ électromagnétique. La présence du transpondeur dans le champ fait résonner le circuit oscillant et provoque une modification du champ qui est détectable par le lecteur. Ces systèmes, très simples, sont couramment utilisés comme anti-vol dans les magasins.

Pour les systèmes les plus complexes, le transpondeur comporte par exemple un circuit intégré connecté à une bobine, la bobine et le circuit intégré formant entre autre un circuit résonant accordé. La présence du transpondeur dans le champ électromagnétique alimente le circuit intégré qui module le champ électromagnétique pour signaler sa présence au lecteur. Puis, un dialogue peut s'effectuer entre le transpondeur et le lecteur par modulation du champ électromagnétique.

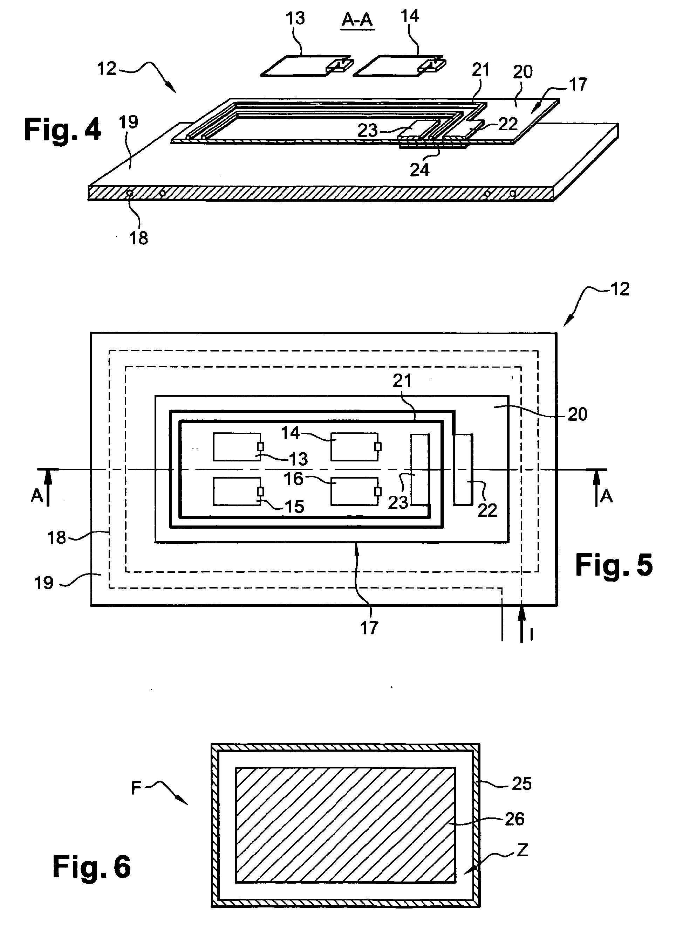

Aux figures 4 et 5, un système de lecture permet des améliorations de la lecture de plusieurs transpondeurs 13-16 en mettant en oeuvre, lors de la lecture, un couplage magnétique des transpondeurs avec un circuit résonant passif 17.

Le système de lecture 12 comporte l'antenne d'émission réception 18 noyée dans un support 19 et le circuit résonant passif 17 est réalisé sur un support plan 20 par exemple une feuille en papier, et comporte une antenne ouverte 21 dont les extrémités sont reliées à des armatures 22, 23 de condensateur. L'antenne est en fait un double faces réalisée par sérigraphie d'encre conductrice; sur la face inférieure une armature de condensateur 24 fait face aux deux armatures 22, 23 terminales reliées aux spires.

Le circuit passif est disposé dans l'exemple au-dessus de l'antenne du lecteur, par exemple posé ou fixé par collage sur un plan support au voisinage de l'antenne radiofréquence du lecteur.

Selon un mode de mise en oeuvre, l'antenne passive du circuit résonant est associée au moins pendant la lecture, à au moins une antenne de transpondeur. Par association, on entend un rapprochement physique de leur position de manière à avoir un couplage magnétique entre eux avec ou sans support commun.

Selon une étape du procédé, le circuit résonant passif est accordé à une fréquence de résonance de manière à ce que la fréquence de résonance résultant de l'association avec au moins l'antenne de transpondeur corresponde à une des fréquences des bandes latérales d'émission du transpondeur à lire.

L'avantage est de favoriser la détection par le lecteur des variations du champ provoqué par les transpondeurs lorsqu'ils répondent.

De préférence, les transpondeurs sont conformés ou conçus de manière à être négligé dans l'association avec le circuit résonant passif, notamment en puisant chacun moins de champ magnétique et/ou en interférant moins avec les autres antennes de transpondeur. Les transpondeurs ont pour à cet effet un format réduit comparativement à l'antenne du circuit résonant passif. Dans l'exemple, le transpondeur est l'un ou plusieurs des transpondeurs 13-16 de petit format à lire comparativement à l'antenne. Le format réduit des transpondeurs est par exemple inférieur à 1/10° voire 1/ 5° le format de l'antenne du circuit résonant passif.

L'avantage est de permettre l'alimentation le plus possible de transpondeurs avec une même densité de champ.

Ainsi, dans l'exemple, comme cette association est négligeable dans la mesure ou il n'y a pas d'influence significative des petits transpondeurs sur la fréquence de résonance résultante de l'association, on accorde le circuit résonant à une fréquence correspondant juste à une des fréquences des bandes latérales d'émission du transpondeur à lire.

Les bandes latérales d'émission sont générées par tout transpondeur soumis à champ magnétique d'interrogation que le transpondeur module, notamment en amplitude, au cours de sa réponse.

Les bandes latérales existent pour d'autres principes de modulation de la communication entre un lecteur et un transpondeur, en particulier la modulation de phase et modulation de fréquence.

Dans l'exemple, une modulation d'amplitude d'un signal sinusoïdal de fréquence 13,56 MHZ par un signal modulant de 847Khz correspondant à la sous porteuse, généré par le transpondeur, créé d'un point de vue spectral un signal à deux bandes latérales situées à 13,56MHz +/-847 KHz, soit respectivement 12,71 et 14,4 MHz.

D'autres bandes latérales que celles ci-dessus sont également générées mais avec une énergie moins importante.

Pour favoriser au maximum la détection par le lecteur et atteindre le niveau minimum de champ rétromodulé défini par la norme ISO/IEC 14443 la fréquence de résonance du circuit résonant passif est choisie à 14,4 MHz. soit 13,56 MHz + 847 KHz.

D'autres exemples d'association sont illustrés ultérieurement.

Selon une autre mode de mise en oeuvre, on détermine au moins un format F d'antenne de transpondeur et une réponse de transpondeur ayant un comportement ou des caractéristiques correspond à ce format puis on configure le circuit résonnant passif de manière à obtenir le comportement ou les caractéristiques correspondant à ce format pour chaque transpondeur.

L'antenne passive a donc été volontairement délimitée dans une zone Z (fig. 6 ) entre deux rectangles 25, 26 centrés l'un sur l'autre et sur le format ID1 décrit dans la norme ISO/IEC 14443, respectivement de 81 mm x 49 mm et de 64 mm x 34 mm

L'avantage est de pouvoir obtenir une réponse de petits transpondeurs possédant des caractéristiques des grands tout en permettant une lecture de plus de transpondeurs à champ d'interrogation constant.

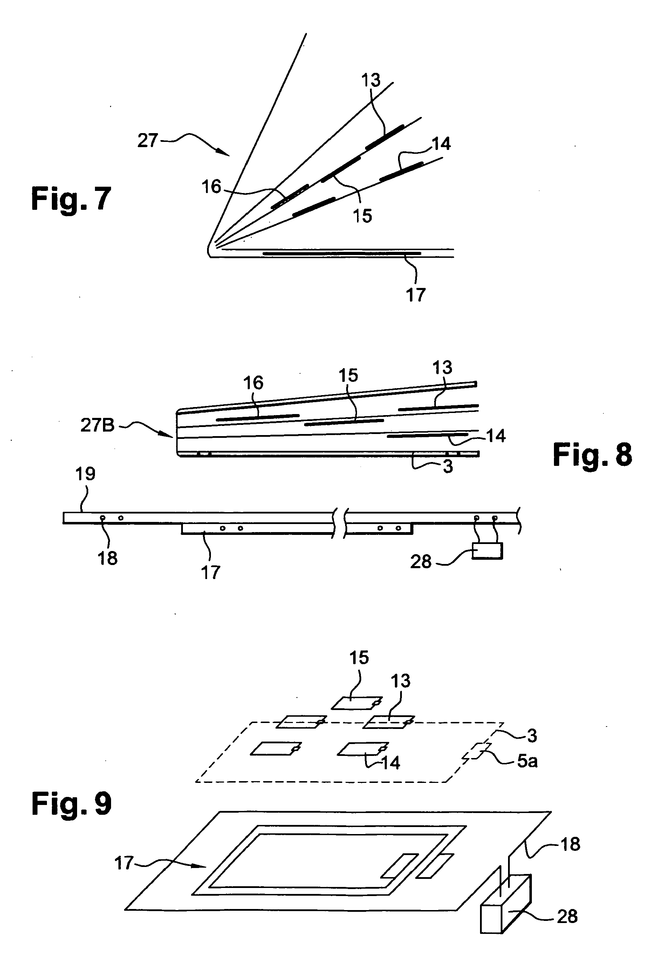

Cela permet notamment pour satisfaire les spécifications de l'ICAO, pour laquelle de manière à permettre une lecture d'un plus grand nombre de transpondeurs, on réalise un document de voyage 27 (figure 7) type e-passeport ou e-Visa comportant l'antenne passive (ou circuit résonant passif 17 formé d'une ou plusieurs pistes conductrices) notamment dans la couverture du passeport.

Ce document de voyage ainsi réalisé pourra accueillir un ou plusieurs transpondeurs 13- 16 chacun prélevant la part de champ local induit par le circuit résonant passif soumis au champ du lecteur additionné de la part du champ rayonné par l'antenne du lecteur autour de la surface du ou des modules antenne 13-16.

Les figures 8 et 9 illustrent le système de lecture de document de voyage. Il comprend comme précédemment un support de lecture 19 contenant une antenne émettrice et réceptrice 18 relié à des moyens 28 de traitement et d'exploitation des signaux reçus.

Le circuit résonant 17 est fixé ici sous le support de lecture. L'avantage étant d'avoir un circuit commun au niveau lecteur pour tous les passeports. Alors que dans l'exemple de la figure 7, chaque document comportant ce circuit résonant, il n'est pas indispensable de le disposer au niveau du lecteur.

Dans l'exemple, conformément aux spécifications de l'ICAO, on fixe l'amplitude de champ magnétique H du lecteur à une valeur supérieure ou égale à 1,5 A/m, et l'amplitude de réponse du transpondeur à une valeur supérieure ou égale à $30/H^{1,2}$.

Le document de voyage comporte un transpondeur de grand format 3 par exemple ID1 et plusieurs transpondeurs 13-16 à titre de visas électroniques de formats réduits.

Les modules à antenne 13-16 ne sont pas forcément situés sur le même plan que celui sur lequel se trouve l'antenne passive.

A la figure 8, le circuit résonant passif 17 est disposé en dehors du document de voyage. Il est associé au système de lecture en étant fixé dessous le support de lecture.

Toutefois, il pourrait être mis à proximité notamment, au-dessus, posé ou collé au support de lecture.

Le circuit résonant passif peut être présenté sous forme d'une étiquette fixée au document notamment par collage. Il peut être intégré dans le document notamment dans une de ses pages ou couvertures.

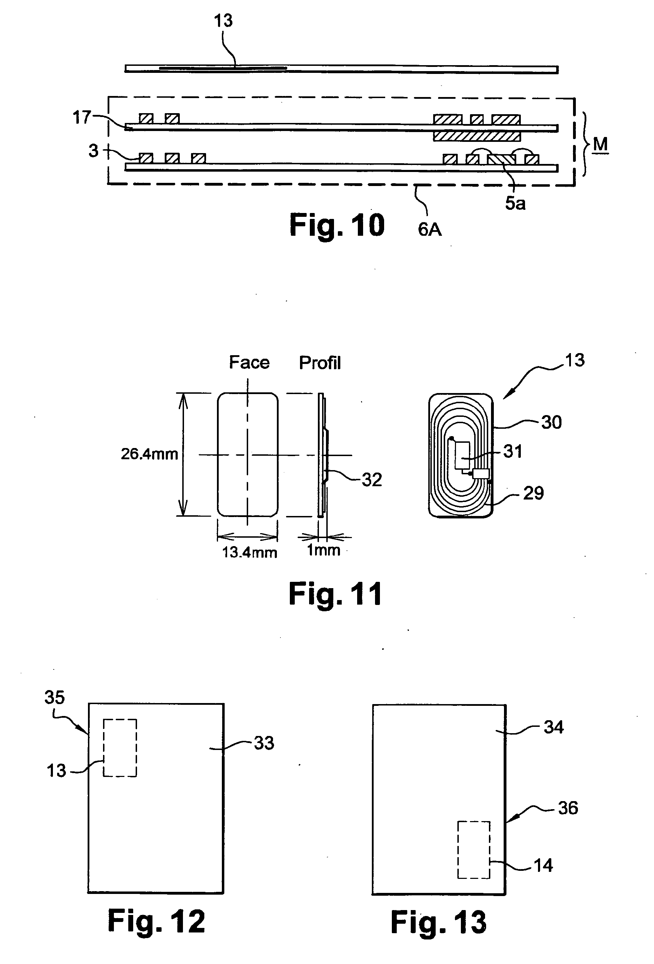

Les transpondeurs à lire (13-16, 3) sont dans le document de voyage 27B. Dans ce document il y a des transpondeurs de formats réduits dit secondaires et un transpondeur de grand format dit principal. Dans ce cas, comme indiqué en relation avec la figure 10 décrite infra, il est recommandé d'accorder le circuit résonant passif en tenant compte de l'association avec le circuit principal.

Le bilan de couplage et énergétique d'une telle solution est incomparable au bilan obtenu par des transpondeurs de taille ID1 compatible ISO/IEC14443. Chaque module-antenne pris individuellement est perçu par le lecteur comme ayant un format et donc une action sur le champ magnétique du lecteur correspondant à celui de l'antenne passive qui elle est conforme au standard ID1 des documents de voyage.

Les caractéristiques géométriques et électriques d'une part du circuit résonant passif et d'autre part les modules à antenne correspondent de préférence à la description suivante :

Vu du lecteur mais également des dispositifs de test, tels que ceux décrit dans les méthodes de test des produits sans contact : l'ISO/IEC 10373-6, le document de voyage comportant plusieurs Visas électroniques doit apparaître comme un seul produit sans contact.

Il en découle les principes préférés suivants pour réaliser un circuit résonant passif à inclure dans le document de voyage du type passeport électronique.

Le circuit résonant passif doit être tel, que son couplage avec le lecteur provoque un effet conforme aux cartes sans contact équipé d'une antenne de format ID1.

Il doit provoquer une charge faible sur le champ électromagnétique généré par le lecteur. Cette charge doit correspondre à celle provoquée par la référence PICC annexe D de la norme ISO/IEC 10373-6 réglé à 6Volt pour Hmin. La charge induite par le transpondeur correspond à une antenne ID1 accordée à 13,56 Mhz comportant une partie résistive de 1,8 kΩ et dont la tension résultant du champ d'interrogation est inférieure à 6V continue aux bornes de la charge.

Ce qui donne au circuit résonant les caractéristiques géométriques ci-après.

Comme décrit précédemment, l'antenne passive a donc été volontairement délimitée dans une zone Z entre deux rectangles 25, 26 centrés l'un sur l'autre et sur le format ID1 décrit dans la norme ISO/IEC 14443, respectivement de 81 mm x 49 mm et de 64 mm x 34 mm (fig. 6)

De manière à ne pas trop limiter le champ généré par le lecteur sans contact, on limite volontairement le facteur qualité du circuit résonnant passif a une valeur inférieure à 30.

Le coefficient de qualité optimal de ce circuit résonant pour remplir les conditions décrites plus précédemment est compris entre 10 et 20. La valeur optimale du facteur qualité du circuit résonant passif est 20. Cela autorise des technologies de dessin antenne à forte résistance électrique telles que le sérigraphie à encre argent ou encore à encre de carbone. Du fait de la nécessité d'un facteur de surtension, le circuit résonnant passif doit être constitué d'une antenne constituée de plusieurs tours et reliée à un condensateur.

Le circuit résonant passif doit fournir aux modules à antenne couplés électromagnétiquement, l'énergie additionnelle qui leur est nécessaire du fait de leur faible surface de couplage avec le lecteur. Le circuit résonnant passif doit générer un champ local additionnel à celui issu du lecteur qui permettre l'alimentation des modules à antenne.

D'autre part, (figure 11) le transpondeur 13 peut être réalisé sous forme d'un module à antenne conforme à la technologie carte à puce. Il comporte une antenne plate 29 sur un support isolant 30 (film diélectrique) dans un plan et connecté à une puce de circuit intégré 31. La puce peut ou non comprendre une résine d'enrobage de protection 32. L'ensemble peut avoir une épaisseur globale inférieure à 1mm.

L'antenne 29 est de préférence réalisée en fil métallique ou gravure de cuivre de manière à présenter un bon facteur de qualité.

Le transpondeur sera avantageusement d'une taille raisonnable par exemple : Longueur 25mm par largeur 15 mm et comportant une antenne d'une quinzaine de tours par exemple entre 13 et 18 spires. Le nombre de spires dépendra très légèrement de la puce choisie.

Chaque spire par exemple en cuivre possède, par exemple, une largeur de l'ordre de 50 à 300 $\mu$m avec un espacement entre deux spires contiguës de l'ordre de 50 à 200 $\mu$m.

Un compromis ou optimisation entre les rapports de surfaces est à faire. Un module-antenne de surface trop petite par exemple inférieure à 10mm par 10mm nécessiterait un positionnement très précis vis à vis du circuit résonant passif pour permettre un bon fonctionnement ce qui exclut à priori les réalisations à base d'antennes réalisées directement sur la surface de la puce.

A contrario, un module-antenne de taille supérieure à 30 mm par 30 mm consommerait trop de champ magnétique et se couplerait trop avec les autres modules à antenne pour permettre le fonctionnement de plusieurs puces de circuit intégré ou visas électroniques.

Idéalement la fréquence de résonance des transpondeurs est de 17 MHz.

Compte tenu de la géométrie des transpondeurs, de leur fréquence de résonance, et de leur nombre de tours, le nombre de tours du circuit résonant passif est optimal pour 4 tours. La surface des armatures de condensateur est calculée de manière à effectuer l'accord de fréquence mentionné précédemment.

A la figure 10, le circuit résonant passif 17 est associé à un transpondeur présentant une antenne de dimension comparable à celle du circuit passif. Son importance est telle qu'il doit être considéré dans le réglage de l'accord en fréquence du circuit résonant passif.

En effet, la fréquence de résonance résultante de deux circuits est définie par la relation :

$$fres,2 = \frac{fres}{\sqrt{1+k}}$$

k : coefficient de couplage entre les transpondeurs (égal à 1 si couplage maximal)

fres,2 : fréquence de résonance résultante de l'association de deux transpondeurs de même fréquence de résonance "fres".

Ce peut être par exemple, le transpondeur au format ID1 tel que disposé actuellement dans la couverture du passeport électronique de l'art antérieur ou un des visa électronique au format ID1 de la figure 2.

Le circuit résonant passif est accordé de manière à ce que la fréquence de résonance résultant de l'association M corresponde à une des fréquences des bandes latérales d'émission du transpondeur à lire.

Les deux éléments associés peuvent être groupés ensemble dans un même support, par exemple une couverture 6A de document de voyage.

Par extension de ce principe, l'association peut concerner plusieurs transpondeurs dès lors que leur nombre leur donne une importance à ne pas négliger.

Selon une disposition avantageuse illustrée aux figures 12, 13, chaque visa électronique est disposé dans un support 33, 34, par exemple une feuille sensiblement au format du document ou légèrement inférieur. Dans l'application au passeport, le support est au format ID1 ou légèrement inférieur. L'important étant de ne pas laisser de choix à l'utilisateur lors de la fixation ou glissement dans le document.

Ce support 33 de transpondeur est à glisser dans le document ou à coller sur une page notamment à l'aide d'un revêtement autocollant.

Le transpondeur 13 est disposé dans une position aléatoire à l'intérieur du support lors de la fabrication du visa notamment par lamination. A la figure 12, il est disposé le long du bord latéral gauche 35 tandis qu'il est disposé le long du bord latéral droit 36 sur la figure 13. Ainsi lors d'une superposition des deux feuilles, les transpondeurs se couplent moins ensemble.

Un procédé de réalisation des transpondeurs doit comprendre à cet effet une étape et des moyens de disposition aléatoire ou variée du transpondeur dans une surface de feuille support de transpondeur, par exemple, lors de la lamination de feuilles prenant le transpondeur en sandwich.

Ainsi, lorsqu'il est reporté dans le document de voyage, il est distribué également aléatoirement par rapport aux autres transpondeurs. Il en résulte que les étiquettes sont rendues toutes différentes d'un point de vue magnétique et pourront plus facilement fonctionner même superposées.

Ainsi, grâce à l'invention, il est possible de rendre possible l'application Visa électronique avec un nombre important de visas électroniques plus important. Les caractéristiques préférées exposées ci-dessus ont permis de lire jusqu'à 15 transpondeurs conformes aux spécifications de l'ICAO.

Le procédé de lecture pourra mettre en oeuvre un mécanisme ou protocole d'anticollision de type connu notamment celui décrit dans la norme. Le mécanisme peut être déclenché sur l'initiative des moyens de traitement du lecteur.

L'invention vue selon un autre aspect, permet la réalisation de document de voyage électronique. Ce document est sensé comprendre une pluralité de transpondeurs conformes à des contraintes ou spécifications notamment normatives (ICAO), qui imposent au moins un format ID1 d'antenne de transpondeur, une amplitude minimale de champ magnétique H de lecture et une amplitude minimale de réponse des transpondeurs.

Selon cet autre aspect, le transpondeur est réalisé avec un format d'antenne inférieur du format ID1, et on agence ledit transpondeur avec un circuit résonant passif ayant un condensateur et une antenne passive au format ID1 de manière à ce que le transpondeur soit vu par le lecteur comme un transpondeur au format ID1.

Le document de voyage selon l'invention peut comporter plusieurs pages et une pluralité de transpondeurs entre les pages, chaque transpondeur étant contenu dans un support plan distinct des pages mais ayant sensiblement le format d'une page du document.

Ce document est facilement lisible avec l'ensemble des transpondeurs dans la mesure où les transpondeurs sont disposés dans les supports dans différentes positions.

Par conséquent, l'invention se distingue également par un ensemble ou un jeu de transpondeurs, notamment pour visas électroniques, en ce que chaque transpondeur est disposé dans une feuille (33, 34) d'un format plus grand que lui, et en ce que les transpondeurs sont disposés dans les feuilles (33, 34) dans différentes positions d'une feuille à l'autre.

Bien que l'invention ait été décrite principalement en relation avec un document de voyage, elle s'applique notamment à tout objet support de circuit résonant passif associé au moins au transpondeur, comme par exemple, une étiquette électronique, une carte à puce comprenant un module-antenne associé à un circuit résonant passif dont l'antenne est au format d'une carte à puce sans contact ID1.

Ces objets sont de préférence portables comme une carte à puce ou un téléphone cellulaire.

L'antenne passive peut être incluse dans le corps de carte à puce, notamment autour du module-antenne encarté dans une cavité standard de carte à puce. L'antenne passive avec le circuit résonant peut être aussi intégrée dans un lecteur.

## Revendications

1. Procédé de lecture de transpondeurs RF disposés dans un même champ magnétique d'interrogation, dans lequel on assure un couplage magnétique des transpondeurs avec un circuit résonant passif (17) lors de la lecture, **caractérisé en ce que** l'antenne passive (21) du circuit résonant est associée à au moins une antenne de transpondeur (3, 13-16), et le circuit résonant passif est accordé de manière à ce que la fréquence de résonance résultant de l'association (M) corresponde à une des fréquences des bandes latérales d'émission du transpondeur (3, 13-16) à lire.

2. Procédé selon la revendication précédente, l'association de l'antenne passive (21) du circuit résonant passif avec à au moins une antenne de transpondeur (3) est rendue négligeable et le circuit résonant passif (17) est accordé à une fréquence de résonance correspondant à une des fréquences des bandes latérales d'émission du transpondeur à lire.

3. Procédé de lecture selon la revendication précédente, **caractérisé en ce que** le procédé comporte en outre une étape selon laquelle:

   - on conforme les transpondeurs (13-16) de manière à être négligés dans l'association avec le circuit résonant passif (17), en puisant chacun moins de champ magnétique et/ou en interférant moins avec les autres antennes de transpondeur.

4. Procédé de lecture selon la revendication précédente,

   - on détermine au moins un format d'antenne et une réponse de transpondeur ayant un comportement correspond à ce format,
   - on configure le circuit résonnant passif et de manière à obtenir un comportement correspondant à ce format pour chaque transpondeur

5. Procédé de lecture selon la revendication 4, **caractérisé en ce que** l'antenne passive est délimitée entre deux rectangles respectivement de 81 mm x 49 mm, et 64 mm x 34 mm.

6. Procédé de lecture selon l'une des revendications 1 ou 2, **caractérisé en ce que** les bandes latérales sont respectivement sélectionnées à environ 13,56 Mhz $\pm$ 847Khz, soit respectivement 12,71 et 14,4 MHz, la fréquence d'interrogation étant de 13,56MHZ cadencée à 847Khz.

7. Procédé de lecture selon la revendication 5, **caractérisé en ce que** l'antenne du circuit résonnant passif (17) comporte entre 3 et 6 spires.

8. Procédé de lecture selon l'une des revendications précédentes, **caractérisé en ce que** le circuit résonant passif (17) présente un facteur qualité de valeur inférieure à 30.

9. Procédé de lecture selon l'une des revendications précédentes, **caractérisé en ce que** le transpondeur a un format réduit et possède une antenne dont la surface à l'intérieur de la spire extérieure est supérieure à une surface de 15 x 15 mm et inférieure à une surface d'environ 30 x 30 mm.

10. Procédé de lecture selon la revendication précédente, **caractérisé en ce que** l'antenne du transpondeur comporte de l'ordre de 13 à 18 spires.

11. Procédé de lecture selon la revendication précédente, **caractérisé en ce que** la fréquence d'accord est comprise entre 15 et 18 MHz.

12. Procédé de lecture selon la revendication précédente, **caractérisé en ce que** le transpondeur possède un facteur qualité supérieur à 30.

13. Procédé de lecture selon la revendication précédente, **caractérisé en ce que** chaque transpondeur (13, 14) est disposé dans un support dans une position aléatoire, le support permettant plusieurs positions du transpondeurs qui sont décalées les unes des autres.

14. Système de lecture (12) d'au moins un transpondeur RF, ledit système comprenant

- un lecteur (18, 19, 28) apte à émettre un champ d'interrogation sur au moins un transpondeur (13, 14) et à recueillir une réponse du transpondeur,
- un circuit résonant passif (17) pour effectuer un couplage magnétique avec au moins un transpondeur lors de la lecture,

**caractérisé en ce que** le circuit résonant passif (17) est accordé de manière à ce que la fréquence de résonance résultant de l'association (M) du circuit résonant avec au moins un transpondeur (3, 13) corresponde à une des fréquences des bandes latérales d'émission du transpondeur à lire.

15. Objet support contenant au moins un transpondeur principal, au moins un transpondeur secondaire et un circuit résonant passif associé au moins au transpondeur principal,
**caractérisé en ce que** le circuit résonant passif (17) est accordé de manière à ce que la fréquence de résonance résultant de l'association (M) du circuit résonant avec le transpondeur principal (3) eu moins, corresponde à une des fréquences des bandes latérales d'émission du transpondeur secondaire (13).

16. Objet support contenant au moins un transpondeur (13-16) et un circuit résonant passif (17) associé au moins au transpondeur,
**caractérisé en ce que** le circuit résonant passif (17) est accordé à une fréquence de résonance correspondant à une des fréquences des bandes latérales d'émission du transpondeur.

17. Objet support selon la revendication précédente, le transpondeur comportant une antenne plate sur un support définissant une spire extérieure, **caractérisé en ce que** :

- la surface à l'intérieur de la spire extérieure est supérieure à une surface de 15 x 15 mm et inférieure ou égale à une surface d'environ 30 x 30 mm,
- l'antenne comporte de l'ordre entre 13 et 18 spires,
- la fréquence d'accord est comprise entre 15 et 18 MHz,
- un facteur qualité supérieur à 30.

18. Document de voyage (27) comportant un objet support selon la revendication précédente, l'objet support comportant plusieurs pages entre deux couvertures et une pluralité de transpondeurs (13-16) entre les pages, chaque transpondeur étant contenu dans un support plan (33, 34) distinct des pages ou couvertures mais ayant sensiblement le format d'une page.

19. Document de voyage selon la revendication précédente, **caractérisé en ce que** les transpondeurs sont disposés dans les supports (33, 34) dans différentes positions.

20. Objet support selon la revendication 17 comportant un ensemble de transpondeurs conforme à la revendication 17, chaque transpondeur étant disposé dans une feuille (33, 34) d'un format plus grand que lui, **caractérisé en ce que** les transpondeurs sont disposés dans les supports (33, 34) dans différentes positions d'une feuille à l'autre.

## Claims

1. A method for reading RF transponders disposed in one and the same magnetic interrogation field, in which a magnetic coupling of the transponders is ensured with a passive resonant circuit (17) during the reading,
**characterised in that** the passive antenna (21) of the resonant circuit is associated with at least one transponder antenna (3, 13-16), and the passive resonant circuit is tuned in such a way that the resonance frequency resulting from the association (M) corresponds to one of the frequencies of the emission side bands of the transponder (3, 13-16) to be read.

2. A method according to the preceding claim, wherein the association of the passive antenna (21) of the passive resonant circuit with at least one transponder antenna (3) is made negligible and the passive resonant circuit (17) is tuned to a resonance frequency corresponding to one of the frequencies of the emission side bands of the transponder to be read.

3. A reading method according to the preceding claim, **characterised in that** the method further includes a step during which:

- the transponders (13-16) are so configured as to be neglected in the association with the passive resonant circuit (17), by each drawing less magnetic field and/or by interfering less with the other antennas of the transponder.

4. A reading method according to the preceding claim,

   - wherein at least one antenna format and one response from a transponder having a behavior corresponding to such format are determined ,
   - the passive resonant circuit is so configured as to obtain a behavior corresponding to such a format for each transponder.

5. A reading method according to claim 4, **characterised in that** the passive antenna is defined between two rectangles respectively 81mm x 49mm, and 64mm x 34mm in dimensions.

6. A reading method according to one of claims 1 or 2, **characterised in that** the side bands are respectively selected approximately at 13.56MHz±847Khz or respectively 12.71 and 14.4MHz, the interrogation frequency being 13.56MHz rated at 847Khz.

7. A reading method according to claim 5, **characterised in that** the antenna of the passive resonant circuit (17) includes between 3 and 6 turns.

8. A reading method according to one of the preceding claims, **characterised in that** the passive resonant circuit (17) has a quality factor with a value of less than 30.

9. A reading method according to one of the preceding claims, **characterised in that** the transponder has a reduced format and has an antenna, the surface inside the outer turn of which is greater than a 15 x 15mm surface and smaller than a surface of approximately 30 x 30mm.

10. A reading method according to the preceding claim, **characterised in that** the transponder antenna includes 13 to 18 turns.

11. A reading method according to the preceding claim, **characterised in that** the tuning frequency is between 15 and 18MHz.

12. A reading method according to the preceding claim, **characterised in that** the transponder has a quality factor above 30.

13. A reading method according to the preceding claim, **characterised in that** each transponder (13, 14) is positioned in a support in a random position, with the support allowing several positions of the transponder which are shifted with respect to each other.

14. A reading system (12) with at least one RF transponder, with said system including

   - one reader (18, 19, 28) able to emit an interrogation field on at least one transponder (13, 14) and to collect a response from the transponder,
   - a passive resonant circuit (17) to perform a magnetic coupling with at least one transponder during the reading,

   **characterised in that** the passive resonant circuit (17) is tuned in such a way that the resonant frequency resulting from the association (M) of the resonant circuit with at least one transponder (3, 13) corresponds to one of the frequencies of the emission side bands of the transponder to be read.

15. A supporting object containing at least one main transponder, at least one secondary transponder and an associated passive resonant circuit associated with at least the main transponder, **characterised in that** the passive resonant circuit (17) is tuned in such a way that the resonant frequency resulting from the association of the resonant circuit with at least the main transponder (3) corresponds with one of the frequencies of the emission side bands of the secondary transponder (13).

16. A supporting object containing at least one transponder (13-16) and one passive resonant circuit (17) associated with at least one transponder, **characterised in that** the passive resonant circuit (17) is tuned to a resonance frequency corresponding to one of the frequencies of the emission side bands of the transponder.

17. A supporting object according to the preceding claim, with the transponder including a flat antenna on a support defining an outer turn, **characterised in that**:

   - the surface inside the outer turn is greater than a 15 x 15mm surface and smaller than or equal to a surface of approximately 30 x 30mm,
   - the antenna includes about 13 to 18 turns,
   - the tuning frequency is between 15 and 18MHz,
   - a quality factor is above 30.

18. A travel document (27) including a supporting object according to the preceding claim, with the supporting object including several pages between two covers and a plurality of transponders (13-16) between the pages, each transponder being contained in a plane support (33, 34) separate from the pages or covers but having substantially the format of a page.

**19.** A travel document according to the preceding claim, **characterised in that** the transponders are positioned in the supports (33, 34) in various positions.

**20.** An assembly of transponders according to claim 17, with each transponder being positioned in a sheet (33, 34) having a greater format than the latter, **characterised in that** the transponders are positioned in the supports (33, 34) in various positions from one sheet to another.

**Patentansprüche**

**1.** Verfahren für das Auslesen von in einem gleichen magnetischen Wechselfeld angeordneten RF-Transpondern, bei dem beim Auslesen eine magnetische Kopplung der Transponder mit einem passiven Resonanzkreis (17) bewerkstelligt wird, **dadurch gekennzeichnet, daß** die passive Antenne (21) des Resonanzkreises zumindest einer Transponderantenne (3, 13 - 16) zugeordnet ist und der passive Resonanzkreis so abgestimmt ist, daß die aus der Verbindung (M) resultierende Resonanzfrequenz einer der Frequenzen der Emissionsseitenbänder des auszulesenden Transponders (3, 13 - 16) entspricht.

**2.** Verfahren nach dem vorstehenden Anspruch, bei dem die Verbindung der passiven Antenne (21) des passiven Resonanzkreises mit zumindest einer Transponderantenne (3) vernachlässigbar wird und der passive Resonanzkreis (17) auf eine Resonanzfrequenz abgestimmt wird, die einer der Frequenzen der Emissionsseitenbänder des auszulesenden Transponders entspricht.

**3.** Verfahren für das Auslesen nach dem vorstehenden Anspruch, **dadurch gekennzeichnet, daß** das Verfahren ferner einen Schritt umfaßt, bei dem:

- die Transponder (13 - 16) so geformt werden, daß sie bei der Verbindung mit dem passiven Resonanzkreis (17) vernachlässigt werden, indem sie jeweils weniger Magnetfeld schöpfen beziehungsweise weniger mit den anderen Transponderantennen interferieren.

**4.** Verfahren für das Auslesen nach dem vorstehenden Anspruch,

- man bestimmt zumindest ein Antennenformat und eine Transponderantwort, die ein diesem Format entsprechendes Verhalten hat,
- man konfiguriert den passiven Resonanzkreis und so, daß ein diesem Format entsprechendes Verhalten jedes Transponders erzielt wird.

**5.** Verfahren für das Auslesen nach Anspruch 4, **dadurch gekennzeichnet, daß** die passive Antenne zwischen zwei Rechtecken mit 81 Millimeter auf 49 Millimeter beziehungsweise 64 Millimeter auf 34 Millimeter abgegrenzt ist.

**6.** Verfahren für das Auslesen nach einem beliebigen der vorstehenden Ansprüche 1 oder 2, **dadurch gekennzeichnet, daß** die Seitenbänder bei circa 13,56 Megahertz $\pm$ 847 Kilohertz gewählt werden, also 12,71 beziehungsweise 14,4 Megahertz, wobei die Wechselfrequenz 13,56 Megahertz getaktet bei 847 Kilohertz beträgt.

**7.** Verfahren für das Auslesen nach Anspruch 5, **dadurch gekennzeichnet, daß** die Antenne des passiven Resonanzkreises (17) zwischen 3 und 6 Windungen umfaßt.

**8.** Verfahren für das Auslesen nach einem beliebigen der vorstehenden Ansprüche, **dadurch gekennzeichnet, daß** der passive Resonanzkreis (17) einen Qualitätsfaktor von unter 30 aufweist.

**9.** Verfahren für das Auslesen nach einem beliebigen der vorstehenden Ansprüche, **dadurch gekennzeichnet, daß** der Transponder ein kleines Format hat und eine Antenne besitzt, deren Fläche im Innern der äußeren Windung größer als eine Fläche von 15 auf 15 Millimeter und kleiner als eine Fläche von circa 30 auf 30 Millimeter ist.

**10.** Verfahren für das Auslesen nach dem vorstehenden Anspruch, **dadurch gekennzeichnet, daß** die Antenne des Transponders circa 13 bis 18 Windungen umfaßt.

**11.** Verfahren für das Auslesen nach dem vorstehenden Anspruch, **dadurch gekennzeichnet, daß** die Abstimmungsfrequenz bei zwischen 15 und 18 Megahertz liegt.

**12.** Verfahren für das Auslesen nach dem vorstehenden Anspruch, **dadurch gekennzeichnet, daß** der Transponder einen Qualitätsfaktor von über 30 aufweist.

**13.** Verfahren für das Auslesen nach dem vorstehenden Anspruch, **dadurch gekennzeichnet, daß** jeder Transponder (13, 14) in einem Träger in beliebiger Position angeordnet ist, wobei der Träger mehrere Positionen des Transponders zuläßt, die jeweils untereinander verschoben sind.

**14.** System für das Auslesen (12) von zumindest einem RF-Transponder, wobei das besagte System folgende Teile umfaßt:

- ein Lesegerät (18, 19, 28), das geeignet ist, ein Wechselfeld auf zumindest einem Transponder (13, 14) auszugeben und eine Antwort vom Transponder zu empfangen,

- einen passiven Resonanzkreis (17) für die Herstellung einer magnetischen Kopplung mit zumindest einem Transponder beim Auslesen,

**dadurch gekennzeichnet, daß** der passive Resonanzkreis (17) so abgestimmt ist, die Resonanzfrequenz, die aus der Verbindung (M) des Resonanzkreises mit zumindest einem Transponder (3, 13) resultiert, einer der Frequenzen der Emissionsseitenbänder des auszulesenden Transponders entspricht.

15. Trägerobjekt, das zumindest einen Haupttransponder, zumindest einen Sekundärtransponder und einen zumindest dem Haupttransponder zugeordneten passiven Resonanzkreis trägt, **dadurch gekennzeichnet, daß** der passive Resonanzkreis (17) so abgestimmt ist, daß die Resonanzfrequenz, die aus der Verbindung (M) des Resonanzkreises mit zumindest dem Haupttransponder (3) resultiert, einer der Frequenzen der Emissionsseitenbänder des Sekundärtransponders (13) entspricht.

16. Trägerobjekt, das zumindest einen Transponder (13 - 16) und einen zumindest dem Transponder zugeordneten passiven Resonanzkreis (17) trägt, **dadurch gekennzeichnet, daß** der passive Resonanzkreis (17) auf eine Resonanzfrequenz abgestimmt ist, die einer der Frequenzen der Emissionsseitenbänder des Transponders entspricht.

17. Trägerobjekt nach dem vorstehenden Anspruch, wobei der Transponder eine Flachantenne auf einem Träger umfaßt, der eine äußere Windung beschreibt, **dadurch gekennzeichnet, daß**

- die Fläche im Innern der äußeren Windung größer als eine Fläche von 15 auf 15 Millimeter und kleiner oder gleich einer Fläche von circa 30 auf 30 Millimeter ist,
- die Antenne circa 13 bis 18 Windungen umfaßt,
- die Abstimmungsfrequenz bei zwischen 15 und 18 Megahertz liegt,
- einen Qualitätsfaktor von über 30 aufweist.

18. Reisedokument (27), das ein Trägerobjekt nach dem vorstehenden Anspruch umfaßt, wobei das Trägerobjekt mehrere Seiten zwischen zwei Abdeckungen und eine Mehrzahl von Transpondern (13 - 16) zwischen den Seiten umfaßt, wobei jeder Transponder in einem ebenen Träger (33, 34) enthalten ist, der von den Seiten oder Abdeckungen getrennt ist, aber deutlich das Format einer Seite hat.

19. Reisedokument nach dem vorstehenden Anspruch, **dadurch gekennzeichnet, daß** die Transponder in den Trägern (33, 34) in unterschiedlichen Positionen angeordnet sind.

20. Trägerobjekt nach Anspruch 17, das eine Gruppe von Transpondern gemäß dem Anspruch 17 umfaßt, wobei jeder Transponder in einem Blatt (33, 34) in einem größeren Format als er selbst angeordnet ist, **dadurch gekennzeichnet, daß** die Transponder in den Trägern (33, 34) in von einem Blatt zum nächsten unterschiedlichen Positionen angeordnet sind.

**Art antérieur**
**Fig. 1**

**Art antérieur**
**Fig. 2**

**Art antérieur** **Fig. 3**

**Fig. 4**

A-A

13   14

12

21   20   17

19   23   22

24

18

**Fig. 5**

12

21

14   20

13

16

A   A

23   22

15

18

19

17

I

**Fig. 6**

F

25

26

Z

**Fig. 7**

**Fig. 8**

**Fig. 9**

**Fig. 10**

**Fig. 11**

**Fig. 12**

**Fig. 13**

**EP 2 067 115 B1**

**RÉFÉRENCES CITÉES DANS LA DESCRIPTION**

**Documents brevets cités dans la description**

- FR 2777141
- US 6172608 B
- FR 2812482 A1